**Europäisches Patentamt**

(19) **European Patent Office**

**Office européen des brevets**

(11) Veröffentlichungsnummer: **0 233 924**
**B1**

(12) **EUROPÄISCHE PATENTSCHRIFT**

(45) Veröffentlichungstag der Patentschrift:
**08.11.89**

(51) Int. Cl.⁴: **C 02 F 3/04**, C 02 F 3/30

(21) Anmeldenummer: **86905194.6**

(22) Anmeldetag: **16.08.86**

(86) Internationale Anmeldenummer:
**PCT/DE 86/00334**

(87) Internationale Veröffentlichungsnummer:
**WO 87/01109 (26.02.87** Gazette 87/5)

(54) **NACHKLÄRVORRICHTUNG.**

(30) Priorität: **20.08.85 DE 3529668**

(43) Veröffentlichungstag der Anmeldung:
**02.09.87 Patentblatt 87/36**

(45) Bekanntmachung des Hinweises auf die Patenterteilung:
**08.11.89 Patentblatt 89/45**

(84) Benannte Vertragsstaaten:
**AT BE CH DE FR GB IT LI LU NL SE**

(56) Entgegenhaltungen:
**DE-A- 3 049 609**
**DE-A- 3 341 374**
**FR-A- 2 307 922**
**FR-A- 2 372 773**
**US-A- 3 029 950**

(73) Patentinhaber: **BLUM, Albert, Scheiderhöhe,**
**D-5204 Lohmar 1 (DE)**

(72) Erfinder: **PANTHÖFER, Rudolf, Keplerstrasse 24,**
**D-5205 St. Augustin 3 (DE)**

(74) Vertreter: **Lippert, Hans-Joachim, Dipl.-Ing. et al,**
**Dipl.-Ing. W. Dahlke Dipl.-Ing. H.-J. Lippert**
**Patentanwälte Frankenforster Strasse 137,**
**D-5060 Bergisch Gladbach 3 (DE)**

**Beschreibung**

Die Erfindung betrifft eine Nachklärvorrichtung, bestehend aus einem Behandlungsgefäß mit einem in seinen oberen Bereich mündenden Flüssigkeitszulauf, einem aus seinem unteren Bereich herausführenden Ablauf sowie in seinem Innenraum vorgesehenem Tropfkörpermaterial.

Bekannte Nachklärvorrichtungen der genannten Art wurden zunächst in erster Linie zur biologischen Reinigung häuslicher Abwässer eingesetzt. In neuerer Zeit wird das Tropfkörperverfahren auch zur Reinigung industrieller Abwässer benutzt. Bei den bekannten Vorrichtungen rieselt das Abwasser durch einen runden, oben und unten offenen Behälter durch eine geschüttete Brockenmasse, dem sogenannten Tropfkörpermaterial, welches aus Lavaschlacke, Koks, Kunststoff-Formkörpern und dergleichen besteht. Auf der Oberfläche des Tropfkörpermaterials bildet sich nach einer Anlaufzeit von einigen Wochen ein schleimiger Belag, der sogenannte biologische Rasen, der vorwiegend aus Bakterien, Pilzen und Einzellern besteht. Gelöste und kolloidal verteilte organische Stoffe des Abwassers werden dort absorbiert und von den Organismen aerob, d.h. unter Sauerstoffeinwirkung, abgebaut.

Gemäß der DE-A-3 049 609 ist eine aerob betriebene Nachklärvorrichtung bekannt, die auswechselbare Stapel horizontal angeordneter, vom Abwasser befluteter Platten aufweist. Diese Platten dienen als Ansiedlungsfläche für Bakterien. Sie bilden dabei gleichzeitig eine Mehrzahl von Umlenkeinrichtungen zur Verlängerung des Durchlaufweges des Abwassers.

Bei der Anwendung des Tropfkörperverfahrens im häuslichen Bereich ist die Nachklärvorrichtung in der Regel einer Dreikammerklärgrube nachgeschaltet, wobei die Nachklärvorrichtung im wesentlichen aus einer weiteren Grube besteht, die mit fest eingebrachtem Tropfkörpermaterial gefüllt ist.

Derartige bekannte Nachklärvorrichtungen weisen den Nachteil auf, daß es praktisch keine Reinigungsmöglichkeiten gibt, so daß die Nachklärvorrichtung nach einer bestimmten Zeit in ihrer Wirkung nachläßt. Das die Nachklärvorrichtung verlassende Abwasser ist nicht ausreichend gereinigt und stellt einen Belastungsfaktor für die Umwelt dar, insbesondere für die Böden, in welchen es versickert, bzw. für Bäche und Flüsse, in welche es eingeleitet wird.

Der Erfindung liegt die Aufgabe zugrunde, die Nachklärvorrichtung der eingangs genannten Art derart weiterzubilden, daß sie bei geringstmöglichem Wartungsaufwand stets ihre optimale Reinigungswirkung beibehält.

Erfindungsgemäß wird diese Aufgabe dadurch gelöst, daß das Behandlungsgefäß als transportable, austauschbare Kassette ausgebildet ist und daß der Innenraum des Behandlungsgefäßes mit einer Schüttung aus Tropfkörpermaterial gefüllt ist, wobei dieser Innenraum eine Mehrzahl von Umlenkeinrichtungen zur Verlängerung des Durchlaufweges des Abwassers aufweist.

Aufgrund der Mobilität des Behandlungsgefäßes kann dieses ohne weiteres durch ein anderes Gefäß mit neuem oder gereinigtem Tropfkörpermaterial ausgetauscht werden. Alternativ kann das Tropfkörpermaterial auch an Ort und Stelle durch neues Tropfkörpermaterial ersetzt oder das verbrauchte Tropfkörpermaterial gereinigt werden. Aufgrund der Tatsache, daß das nachzuklärende Abwasser einen langen Weg durch das Behandlungsgefäß durchlaufen muß und somit über einen erheblichen Zeitraum in dem Gefäß verweilt, kann das Behandlungsgefäß relativ klein ausgebildet sein, so daß es leicht gehandhabt werden kann. Beispielsweise kann es als kompakte Kassette ausgebildet sein, die sich ohne größeren Aufwand transportieren und bequem durch eine Kassette mit frischem Tropfkörpermaterial austauschen läßt.

Vorzugsweise sind als Umlenkeinrichtungen etwa horizontal verlaufende Querböden vorgesehen, die in abwechselnder Folge auf gegenüberliegenden Seiten vertikale Flüssigkeitsdurchlässe aufweisen. Derartige Hindernisse lassen sich mit relativ geringem Aufwand anbringen und können auch ohne Schwierigkeit einstückig mit dem Behandlungsgefäß ausgebildet sein, beispielsweise in Form eines rotationsgesinterten Kunststoffteils.

Zweckmäßig weisen die vertikalen Flüssigkeitsdurchlässe jeweils etwa den gleichen freien Durchlaßquerschnitt auf wie die horizontalen Durchgangskanäle zwischen zwei Querböden. Durch diese Maßnahme wird eine gleichmäßige Durchströmung des Behandlungsgefäßes erreicht.

Die Querböden können auf der Seite der jeweiligen Flüssigkeitsdurchlässe eine Stück vor der benachbarten Wand des Behältnisses enden, wobei ein Durchlaßspalt zwischen der Endkante des jeweiligen Querbodens und der benachbarten Wand entsteht. Dadurch ist ein strömungsgünstiger Durchgang durch das Behandlungsgefäß gesichert, ohne daß es zu Verstopfungen in irgendwelchen Engpässen kommen kann.

Vorzugsweise hat das Behandlungsgefäß eine säulenförmige Gestalt, deren Säulenlängsachse im wesentlichen vertikal angeordnet ist und deren Höhe einem Mehrfachen ihres größten Durchmessers entspricht. Ein solches schlankes Gefäß läßt sich leicht handhaben und beispielsweise leicht in speziell vorgesehene Schächte einsetzen und aus diesen herausheben.

Der Grundriß des Behandlungsgefäßes ist vorzugsweise rechteckig. Ein solches Gefäß läßt sich relativ preiswert herstellen.

Eine vertikale Seitenwand des Behandlungsgefäßes, und zwar zweckmäßig eine parallel zu den Durchgangskanälen verlaufende Seitenwand, kann als abnehmbarer Deckel ausgebildet sein. Dadurch ist ein leichter Zugang zu dem Tropfkörpermaterial möglich, so daß dieses leicht ausgetauscht bzw. gereinigt werden kann.

Da das Tropfkörperverfahren nur in einer aeroben Umgebung gut funktioniert, weist das Behandlungsgefäß in seinem unteren Bereich zweckmäßig einen Anschluß für künstliche Belüftung auf, so daß das Verfahren bei auftretendem Sauerstoffmangel zusätzlich aktiviert werden kann.

An seiner Ober- und Unterseite weist das Behandlungsgefäß zweckmäßig Siebböden auf, die als Flüssigkeitszulauf und -ablauf dienen und das Tropfkörpermaterial in dem Behandlungsgefäß festhalten.

Wenn die erfindungsgemäße Nachklärvorrichtung einer Dreikammerklärgrube nachgeschaltet wird, so ist zweckmäßig ein gesonderter Nachklärschacht zur Aufnahme des Behandlungsgefäßes vorgesehen, der einen Auslauf an einer Stelle oberhalb des Auslaufs des Behandlungsgefäßes aufweist. Das durch das Behandlungsgefäß durchgelaufene und geklärte Abwasser steigt dann in dem Nachklärschacht außerhalb des Behandlungsgefäßes auf und kann durch den Auslauf des Nachklärschachtes abfließen bzw. entnommen werden. Wenn der Auslauf des Nachklärschachtes relativ hoch liegt, bleibt eine größere Menge an Abwasser stets in dem Behandlungsgefäß stehen, so daß dadurch die Behandlungszeit des Abwassers noch erhöht werden kann.

Wenn der Auslauf des Nachklärschachtes aus technischen Gründen relativ hoch liegen muß, so kann es erforderlich sein, daß im unteren Bereich des Nachklärschachtes eine Tauchpumpe mit einem nach oben führenden Druckrohr zum Abpumpen der nachgeklärten Flüssigkeit vorzusehen ist.

Der Nachklärschacht kann der Außenkontur des Schachtes der Dreikammerklärgrube angepaßt und auf der Seite des Grubenabflusses an der Schachtaußenfläche befestigt sein, wobei ein Verbindungsstutzen vom Grubenabfluß zum Zulauf des Behandlungsgefäßes vorgesehen ist. Ein solcher Nachklärschacht eignet sich insbesondere zur Nachrüstung bei bereits bestehenden Dreikammerklärgruben. Ein solcher Nachklärschacht, der seitlich an der beispielsweise aus Beton bestehenden Gruben befestigt wird, kann als leichtes, einstückiges Kunststoffteil ausgebildet sein, welches sich bequem handhaben und ohne größeren Aufwand nachträglich installieren läßt.

Die Erfindung ist in der Zeichnung beispielsweise veranschaulicht und im nachstehenden im einzelnen anhand der Zeichnung beschrieben.

Es zeigen:

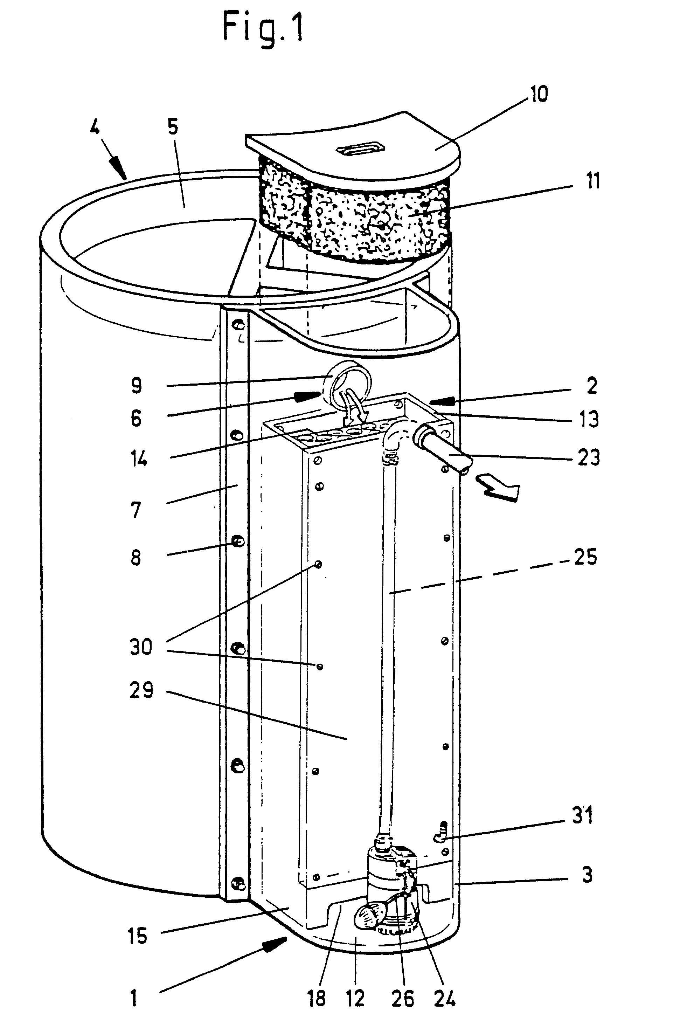

Fig. 1 in perspektivischer Darstellung eine Dreikammerklärgrube mit nachgeschalteter Nachklärvorrichtung und

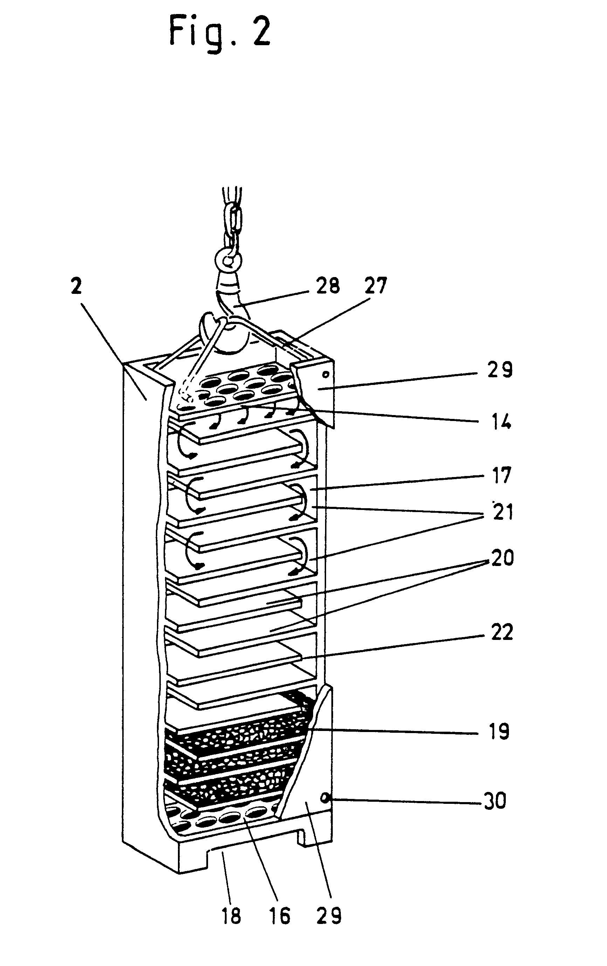

Fig. 2 das aus dem Nachklärschacht herausgehobenen Behandlungsgefäß, teilweise im Schnitt.

Nach der Zeichnung besteht die Nachklärvorrichtung 1 aus einem Behandlungsgefäß 2, welches in einen Nachklärschacht 3 eingesetzt ist. Die Nachklärvorrichtung 1 dient dabei zur Nachklärung von Abwasser, welches bereits in einer Dreikammerklärgrube 4 vorgeklärt worden ist. Die Klärgrube besteht aus einem zylindrischen, in drei Kammern unterteilten Betonschacht 5. Das vorgeklärte Abwasser verläßt die Klärgrube 4 über einen Abfluß 6, der in den Nachklärschacht 3 mündet.

Der Nachklärschacht 3 weist etwa die gleiche Höhe auf wie der die Klärgrube bildende Betonschacht 5 und ist an seiner dem Betonschacht 5 zugewandten Seite der zylindrischen Außenkontur des Betonschachtes 5 angepaßt. Mit Hilfe von zwei seitlichen Flanschen 7, die sich über die gesamte Höhe des Nachklärschachtes 3 erstrecken, ist dieser an dem Betonschacht 5 befestigt, und zwar mit Hilfe von Schrauben 8.

Der Abfluß 6 des Betonschachtes 5 ist mit einem kurzen Stutzen 9 versehen, welcher in der Funktion als Zulaufstutzen in den Nachklärschacht 3 mündet.

Der Nachklärschacht 3 ist mit einer Abdeckung 10 verschließbar, die an ihrer Unterseite mit einer Wärmeisolierung 11 aus beispielsweise Schaumstoff mit hohem Wärmedämmwert versehen ist.

Das Behandlungsgefäß 2, welches in den Nachklärschacht 3 eingesetzt wird, weist einen rechteckigen Querschnitt auf und steht auf dem Boden 12 des Nachklärschachtes auf. Der obere Rand 13 des Behandlungsgefäßes 2 befindet sich in der Betriebsstellung des Behandlungsgefäßes etwas unterhalb des Abwasser-Zulaufstützens 9, so daß das Abwasser in das obere offene Ende des Behandlungsgefäßes 2 einfließen kann.

In einem kurzen Abstand unterhalb des oberen Randes 13 weist das Behandlungsgefäß 2 einen sich über den gesamten Querschnitt erstreckenden Siebboden 14 auf, der eine Verteilung des einfließenden Abwassers über den gesamten Querschnitt des Behandlungsgefäßes ermöglicht. In einem Abstand oberhalb des unteren Randes 15 des Behandlungsgefäßes ist ein unterer Siebboden 16 vorgesehen, der den unteren Abfluß des inneren Behandlungsraumes 17 des Gefäßes 2 begrenzt. Das durch den unteren Siebboden 16 hindurchtretende behandelte Abwasser fließt durch eine Ausnehmung 18, die in dem unteren Rand 15 des Behandlungsgefäßes 2 vorgesehen ist.

Der durch die beiden Siebböden 14 und 16 begrenzte Innenraum 17 des Behandlungsgefäßes 2 ist mit Tropfkörpermaterial 19 gefüllt, beispielsweise mit brokkenförmigem porösem Vulkangestein.

In dem das Tropfkörpermaterial 19 aufnehmenden Innenraum 17 des Behandlungsgefäßes 2 sind mehrere horizontal verlaufende Querböden 20 angeordnet, die in wechselnder Folge auf gegenüberliegenden Seiten vertikale Flüssigkeitsdurchlässe 21 freilassen. Die Flüssigkeitsdurchlässe 21 sind dadurch gebildet, daß der jeweilige Querboden 20 ein Stück vor der benachbarten Wand des Gefäßes 2 endet, wobei ein Durchlaßspalt zwischen der Endkante 22 des jeweiligen Querbodens 20 und der benachbarten Wand entsteht. Die Querböden sind in relativ dichter Folge angeordnet. Bei dem in der Zeichnung dargestellten Ausführungsbeispiel ist das Behandlungsgefäß 2 etwa zwei Meter hoch und weist in seinem durch die beiden Siebböden 14 und 16 begrenzten Innenraum 17 sechzehn Querböden auf. Die Abstände zwischen den einzelnen Querböden 20 sind über die gesamte Höhe des Gefäßinnenraums 17 konstant. Die Breite der als Spalte ausgebildeten Flüssigkeitsdurchlässe 21 entspricht genau der Höhe zwischen zwei Querböden 20, so daß vom oberen Siebboden 14 zum unteren Siebboden 16 ein labyrinthartiger Durchgangskanal mit etwa konstantem Durchlaßquerschnitt gebildet wird. In der Zeichnung ist das Tropfkörpermaterial 19 aus Gründen der Vereinfachung nur zwischen den unteren vier Querböden 20 gezeigt, während tatsächlich der gesamte Innenraum 17 des Behandlungsgefäßes 2 zwischen den beiden Siebböden 14 und 16 mit dem Tropfkörpermaterial ausgefüllt ist.

In dem in der Zeichnung dargestellten Ausführungsbeispiel ist der Nachklärschacht 3 mit einem Auslauf 23 versehen, der etwa in gleicher Höhe wie der Zulaufstutzen 9 liegt. Das durch das Behandlungsgefäß 2 hindurchgelaufene Wasser, welches aus dem unteren Siebboden 16 austritt, sammelt sich auf dem Boden 12 des Nachklärschachtes. Dort befindet sich eine motorbetriebene Tauchpumpe 24, deren Druckseite über ein Druckrohr 25 mit dem Auslauf 23 verbunden ist. Die Tauchpumpe 24 wird mit Hilfe eines Schwimmschalters 26 betätigt. Wenn sich also am Boden des Nachklärschachtes 3 eine bestimmte Menge Wasser gesammelt hat, die in dem freien Raum zwischen dem Behandlungsgefäß 2 und der Innenwand des Nachklärschachtes 3 kommunizierend aufsteigt, wird der Motor der Tauchpumpe 24 mit Hilfe des Schwimmschalters 26 eingeschaltet und pumpt das nachgeklärte Wasser über das Druckrohr 25 zum Auslauf 23, von wo es dann mit höchstem Reinheitsgrad in Flußläufe oder in die Natur abgegeben werden kann. Der Hohe Reinheitsgrad des nachgeklärten Wassers wird insbesondere dadurch erreicht, daß das Wasser durch eine extrem lange Reaktionsstrecke durch das Behandlungsgefäß geführt wird, wobei es dem durch die Querböden 20 gebildeten Labyrinth folgen muß. dadurch läßt sich auf engstem Raum eine sehr intensive Behandlung des Abwassers ermöglichen, zumal das Tropfkörpermaterial stets in bestem Zustand gehalten werden kann.

Das mit dem relativ langem Reaktionsweg ausgestattete Behandlungsgefäß 2 kann relativ kleine Abmessungen aufweisen, ohne daß dadurch die Reinheit des nachgeklärten Wassers beeinträchtigt wird. Aufgrund der Möglichkeit einer kompakten Bauweise läßt sich das Nachklärgefäß leicht als austauschbare Kassette ausbilden, die aus dem Nachklärschacht 3 entnommen und durch eine neue Kassette ersetzt werden kann. Zum Herausheben des Behandlungsgefäßes 2 aus dem Nachklärschacht 3 können beispielsweise im Bereich des oberen Randes 13 des Behandlungsgefäßes 2 auf gegenüberliegenden Seiten zwei schwenkbare Bügel 27 vorgesehen sein, in die der Haken 28 eines Fahrzeugkrans eingehängt werden kann. Zum Herausnehmen des Behandlungsgefäßes 2 aus dem Nachklärschacht 3 kann der Zulaufstutzen 9 abgenommen werden. Alternativ kann der Stutzen 9 aber auch so kurz ausgebildet werden, daß das Behandlungsgefäß 2 beim Anheben an diesem vorbeigeführt werden kann.

Bei dem entnommenen Behandlungsgefäß 2 wird das Tropfkörpermaterial 19 entnommen und entweder gereinigt oder durch frisches Tropfkörpermaterial ersetzt. Um einen leichten Zugang zum Inneren des Behandlungsgefäßes 2 zu ermöglichen, ist eine der breiten vertikalen Seitenwände des Behandlungsgefäßes 2 als abnehmbarer Deckel 29 ausgebildet, der mit Hilfe von Schrauben 30 abnehmbar befestigt ist.

Sowohl das Behandlungsgefäß 2 als auch der nachtrüstbare Nachklärschacht 3 können als Kunststoffteile ausgebildet sein, die im Rotationssinterverfahren hergestellt werden. Bei dem Behandlungsgefäß 2 sind die Querböden 20 einstückig angeformt, so daß die Herstellung relativ einfach ist.

In bestimmten Fällen kann es erforderlich sein, den Innenraum 17 des Behandlungsgefäßes 2 zusätzlich zu belüften. Zu diesem Zweck weist das Behandlungsgefäß 2 in seinem unteren Bereich einen Anschluß 31 für künstliche Belüftung auf. Wird dieser nicht benötigt, so kann er verschlossen werden. Bei Bedarf wird ein mit einer Luftpumpe verbundener Schlauch an dem Anschluß 31 befestigt.

## Patentansprüche

1. Nachklärvorrichtung (1) mit einem Behandlungsgefäß (2), das als transportable, austauschbare Kassette ausgebildet ist, einen in seinen oberen Bereich mündenden Flüssigkeitszulauf (9) und einen aus seinem unteren Bereich herausführenden Flüssigkeitsablauf (16, 18) aufweist und in seinem Innenraum (17) mit einer Mehrzahl von Umlenkeinrichtungen (20) zur Verlängerung des Durchlaufweges des Abwassers versehen ist, wobei der Innenraum (17) mit einer Schüttung aus Tropfkörpermaterial (19) gefüllt ist.

2. Nachklärvorrichtung nach Anspruch 1, dadurch gekennzeichnet, daß als Umlenkeinrichtungen etwa horizontal verlaufende Querböden (20) vorgesehen sind, die in abwechselnder Folge auf gegenüberliegenden Seiten vertikale Flüssigkeitsdurchlässe (21) aufweisen.

3. Nachklärvorrichtung nach Anspruch 1 oder 2 dadurch gekennzeichnet, daß die vertikalen Flüssigkeitsdurchlässe (21) jeweils etwa den gleichen freien Durchlaßquerschnitt aufweisen wie die horizontalen Durchgangskanäle zwischen zwei Querböden (20).

4. Nachklärvorrichtung nach einem der Ansprüche 1 bis 3, dadurch gekennzeichnet, daß die Querböden (20) auf der Seite der jeweiligen Flüssigkeitsdurchlässe (21) ein Stück von der benachbarten Wand des Behandlungsgefäßes enden, wobei ein Durchgangsspalt zwischen der Endkante (22) des jeweiligen Querbodens (20) und der benachbarten Gefäßwand entsteht.

5. Nachklärvorrichtung nach einem der Ansprüche 1 bis 4, dadurch gekennzeichnet, daß das Behandlungsgefäß (2) eine säulenförmige Gestalt aufweist, deren Säulenlängsachse im wesentlichen vertikal angeordnet ist und deren Höhe einem Mehrfachen ihres größten Durchmessers entspricht.

6. Nachklärvorrichtung nach einem der Ansprüche 1 bis 5, dadurch gekennzeichnet, daß der Grundriß des Behandlungsgefäßes (2) rechteckig ist.

7. Nachklärvorrichtung nach einem der Ansprüche 1 bis 6, dadurch gekennzeichnet, daß eine vertikale Seitenwand des Behandlungsgefäßes (2) als abnehmbarer Deckel (29) ausgebildet ist.

8. Nachklärvorrichtung nach Anspruch 6 und 7, dadurch gekennzeichnet, daß eine der parallel zu den Durchgangskanälen verlaufenden Seitenwände als Deckel (29) ausgebildet ist.

9. Nachklärvorrichtung nach einem der Ansprüche 1 bis 8, dadurch gekennzeichnet, daß das Behandlungsgefäß (2) in seinem unteren Bereich einen Anschluß (31) für künstliche Belüftung aufweist.

10. Nachklärvorrichtung nach einem der Ansprüche 1 bis 9, dadurch gekennzeichnet, daß das Behandlungsgefäß (2) an seiner Ober- und Unterseite je einen Siebboden (14, 16) aufweist.

11. Nachklärvorrichtung nach einem der Ansprüche 1 bis 10, zur Anwendung bei Dreikammerklärgruben, dadurch gekennzeichnet, daß ein gesonderter Nachklärschacht (3) zur Aufnahme des Behandlungsgefäßes (2) vorgesehen ist, der einen Auslauf (23) an einer Stelle oberhalb des Auslaufs (16, 18) des Behandlungsgefäßes (2) aufweist.

12. Nachklärvorrichtung nach Anspruch 11, dadurch gekennzeichnet, daß im unteren Bereich des Nachklärschachtes (3) eine Tauchpumpe (24) mit einem nach oben führenden Druckrohr (25) zum Abpumpen der nachgeklärten Flüssigkeit vorgesehen ist.

13. Nachklärvorrichtung nach Anspruch 11 oder 12, dadurch gekennzeichnet, daß der Nachklärschacht (3) der Außenkontur des Schachtes (5) der Dreikammerklärgrube (4) angepaßt und auf der Seite des Grubenabflusses (6) an der Schachtaußenfläche befestigt ist und daß ein Verbindungsstutzen (9) vom Grubenabfluß als Zulauf in das Behandlungsgefäß (2) geführt ist.

14. Nachklärvorrichtung nach einem der Ansprüche 11 bis 13, dadurch gekennzeichnet, daß der Nachklärschacht (3) ein einstückiges Kunststoffteil ist.

## Claims

1. Post-clarification device (1) with a treatment vessel (2), which is formed as a transportable, exchangeable cassette and has a liquid inflow (9) opening into its upper region and a liquid outflow (16, 18) leading out of its lower region and is provided in its interior (17) with a multiplicity of deflecting devices (20) for increasing the length of the throughflow path of the sewage, whereby the interior (17) is filled with loosely spread percolating material (19).

2. Post-clarification device according to claim 1, characterized in that the deflecting devices are transverse floors (20) which extend approximately horizontally and which have vertical liquid passages (21) on opposite sides in alternating sequence.

3. Post-clarification device according to claim 1 or 2, characterized in that the vertical liquid passages (21) each have approximately the same free passage cross-section as the horizontal conduits between two transverse floors (20).

4. Post-clarification device according to one of claims 1 to 3, characterized in that, on the same side as the particular liquid passages (21), the transverse floors (20) end a little before the adjacent wall of the treatment vessel, a passage gap forming between the end edge (22) of the particular transverse floor (20) and the adjacent vessel wall.

5. Post-clarification device according to one of claims 1 to 4, characterized in that the treatment vessel (2) has a column-shaped form, the longitudinal axis of the column of which being arranged essentially vertically and its height corresponding to a multiple of its largest diameter.

6. Post-clarification device according to one of claims 1 to 5, characterized in that the contour of the treatment vessel (2) is rectangular.

7. Post-clarification device according to one of claims 1 to 6, characterized in that one vertical side wall of the treatment vessel (2) is designed as a removable cover (29).

8. Post-clarification device according to claim 6 or 7, characterized in that one of the side walls extending parallel to the conduits is designed as a cover (29).

9. Post-clarification device according to one of claims 1 to 8, characterized in that the treatment vessel (2) has, in its lower region, a connection (31) for artificial ventilation.

10. Post-clarification device according to one of claims 1 to 9, characterized in that the treatment vessel (2) has a sieve plate (14, 16) on its top side and on its underside.

11. Post-clarification device according to one of claims 1 to 10, for use in three-chamber catch pits, characterized in that a separate post-clarification pit (3) is provided for receiving the treatment vessel (2) and has an outflow (23) at a point located above the outflow (16, 18) of the treatment vessel (2).

12. Post-clarification device according to claim 11, characterized in that in the lower region of the post-clarification pit (3) there is a submersible pump (24) which has a pressure pipe (25) leading upwards and which is intended for pumping off the liquid having undergone post-clarification.

13. Post-clarification device according to claim 11 or 12, characterized in that the post-clarification pit (3) is matched to the outer contour of the shaft (5) of the three-chamber catch pit (4) and is fastened to the outer surface of the shaft on the same side as the catch-pit flow-off (6), and in that a connecting piece (9) from the catch-pit flow-off is guided as an inflow into the treatment vessel (2).

14. Post-clarification device according to one of claims 11 to 13, characterized in that the post-clarification pit (3) is a one-piece plastic article.

## Revendications

1. Dispositif d'épuration finale (1) comportant un récipient de traitement (2) qui est réalisé sous forme de cassette remplaçable et transportable, présente une admission de liquide (9) débouchant dans sa région supérieure et un écoulement de liquide (16, 18) partant de sa région inférieure, et est muni, dans son volume intérieur (17), d'une multiplicité de dispositifs formant chicanes (20) destinés à allonger le trajet de passage des eaux usées, le volume intérieur (17) étant rempli d'une matière en vrac (19) formant lit d'épuration.

2. Dispositif d'épuration finale selon la revendication 1, caractérisé en ce qu'il est prévu, en tant que dispositifs formant chicanes, des plateaux transversaux (20) qui s'étendent à peu près horizontalement et qui présentent, en alternance sur les côtés opposés, des passages de liquide verticaux (21).

3. Dispositif d'épuration finale selon la revendication 1 ou 2, caractérisé en ce que les passages de liquide verticaux (21) présentent chacun à peu près la même section libre de passage que les canaux de dérivation horizontaux entre deux plateaux transversaux (20).

4. Dispositif d'épuration finale selon l'une quelconque des revendications 1 à 3, caractérisé en ce que du côté des passages de liquide respectifs (21), les plateaux transversaux (20) se terminent un peu avant la paroi voisine du récipient de traitement, une fente de passage étant ainsi ménagée entre le bord d'extrémité (22) du plateau transversal (20) et la paroi voisine du récipient.

5. Dispositif d'épuration finale selon l'une quelconque des revendications 1 à 4, caractérisé en ce que le récipient de traitement (2) présente une forme de colonne dont l'axe longitudinal est sensiblement vertical et dont la hauteur correspond à une multiple de son plus grand diamètre.

6. Dispositif d'épuration finale selon l'une quelconque des revendications 1 à 5, caractérisé en ce que la projection du récipient de traitement (2) sur un plan horizontal est rectangulaire.

7. Dispositif d'épuration finale selon l'une quelconque des revendications 1 à 6, caractérisé en ce qu'une paroi latérale verticale du récipient de traitement (2) est réalisée sous forme de couvercle amovible (29).

8. Dispositif d'épuration finale selon la revendication 6 ou 7, caractérisé en ce que l'une des parois latérales, s'étendant parallèlement aux canaux de dérivation, est réalisée sous forme de couvercle (29).

9. Dispositif d'épuration finale selon l'une quelconque des revendications 1 à 8, caractérisé en ce que le récipient de traitement (2) présente, dans sa région inférieure, un raccord (31) pour la ventilation artificielle.

10. Dispositif d'épuration finale selon l'une quelconque des revendications 1 à 9, caractérisé en ce que le récipient de traitement (2) présente, sur chacun de ses côtés supérieur et inférieur, une plaque perforée (14, 16).

11. Dispositif d'épuration finale selon l'une quelconque des revendications 1 à 10, destiné à être utilisé dans des fosses septiques à trois compartiments, caractérisé en ce qu'il est prévu un puits séparé d'épuration finale (3) qui est destiné à recevoir le récipient de traitement (2) et qui présente un écoulement (23) en un point situé au-dessus de l'écoulement (16, 18) du récipient de traitement (2).

12. Dispositif d'épuration finale selon la revendication 11, caractérisé en ce qu'il est prévu, dans la région inférieure du puits d'épuration finale (3), une pompe noyée (24) munie d'un tuyau de refoulement (25) qui s'étend vers le haut, pour l'évacuation par pompage du liquide épuré.

13. Dispositif d'épuration finale selon la revendication 11 ou 12, caractérisé en ce que le puits d'épuration finale (3) est adapté au contour extérieur du puits (5) de la fosse septique à trois compartiments (4) et est fixé à la surface extérieure de ce puits (5) du côté de l'écoulement (6) de la fosse, et en ce qu'une tubulare de raccordement (9) s'étend à partir de l'écoulement de la fosse pour servir d'admission dans le récipient de traitement (2).

14. Dispositif d'épuration finale selon l'une quelconque des revendications 11 à 13, caractérisé en ce que le puits d'épuration finale (3) est une pièce de matière plastique d'une seul tenant.

# Fig.1

# Fig. 2